# EUROPEAN PATENT SPECIFICATION

(11) **EP 1 704 051 B1**
(45) Date of publication and mention of the grant of the patent: **24.12.2008**
(21) Application number: 05700796.5
(22) Date of filing: 11.01.2005
(51) Int. Cl.: B32B 27/36, B32B 27/32, B32B 27/10

(54) **THERMOADHESIVE MULTI-LAYER FILM**
MEHRLAGIGE THERMOKLEBEFOLIE
FILM THERMO-COLLANT A COUCHES MULTIPLES

(43) Date of publication of application: 27.09.2006
(73) Proprietor: Siser S.r.l., 36100 Vicenza (IT)
(72) Inventor: GASPARONI, Daniela, I-36100 Vicenza (IT)
(74) Representative: Bettello, Pietro
(86) International application number: PCT/EP2005/000158
(87) International publication number: WO 2006/074686

(56) References cited:
- EP-A- 0 900 669
- WO-A-00/08622

## Description

The present finding concerns a thermoadhesive multi-layer film suitable for the designing/printing and subsequent cutting to obtain portions from it that are to be applied to fabrics and similar, according to the general part of claim 1.

It is known that there are currently multi-layer films on the market that are suitable for undergoing, alternatively, the following work steps:
1 - Using computerised design programs (software) already existing on the market, such multi-layer films are subjected to computerised cutting (plotter), in order to obtain the "profile" (pattern) required for the decoration;
2 - alternatively, such films can be subjected to a digital print in known thermo-resin printing or else inkjet or CLC laser processes; also in this case the films are subsequently cut into parts an electronic processor (plotter).

In both cases the films, suitably cut, are transferred onto the destination fabric, through a per se known hot process.

Such a process is used to apply writing, drawings, company logos and the like onto items of clothing be they sports clothes or otherwise, such as T-shirts, overalls, shorts and work clothes. In other words, these films are used to personalise items of clothing and other (for example: sports bags, umbrellas, etc.).

EP0900669 discloses a thermal transfer imaging sheet for use as a sticker having receptor, substrate and adhesive layers.

The multi-layer films are made up of the following layers:
a) A first support layer, generally defined "carrier", made from paper or plastic film, usually polyester;
b)A further layer of coloured polymeric film, generally consisting of polyvinyl chloride or polyurethane or other suitable mixtures, always with the purpose of constituting the visible decoration to be applied to the destination item;
c)A final layer of thermo-softening adhesive film, which can be made, in particular, from polyester or polyamide or polyurethane resin or furthermore with a mixture of these components, based upon the particular characteristics of the fabrics on which the multi-layer film is to be applied.

In particular, Italian patent application no. VI94A000066 describes a process able to give a particular roughness to the first layer of plastic support film (carrier), which can visibly give rise to an "opaque" effect and to a tactile effect similar to that of a "peach". Alternatively, the first support layer can have a further adhesive layer at the contact surface with the polymeric film; of course, such a support layer can also not have special processing.

In the last few years, the use of fabrics or similar materials equipped with substantial characteristics of elasticity has also become particularly widespread.

As an example there are the materials commercialised with the registered trademarks Lycra, Spandex and Elastine. These materials are personalized through the heat transfer process described previously. Unfortunately, the decoration, subjected to stretching following tension applied to the material itself, permanently deforms, with the consequent formation of creases, folds and other surface defects. Indeed, the decoration may detach from the material and, in any case, the aforementioned decoration is unable to ensure the aesthetic purpose of distinctive character for which it is intended.

The purpose of the present finding is that of providing a multi-layer film that allows, at the same time, effective hot transfer also onto an elasticised material, as well as easy removal of the excess material after computerized cutting.

In particular, the following properties and characteristics are required of the multi-layer film in question:
1.after transfer onto the destination material, the film must be able to deform, perfectly following both the stretches and the returns of the aforementioned material;
2.the possibility of breaking of the decoration once the material has been subjected to elastic deformation must in any case be avoided;
3.the film must not prevent the complete return to the original shape of the piece consisting of the material and decoration, absolutely avoiding the formation of creases, bubbles, folds, partial detachment, etc ...
4.there must be low interference with the modulus of elasticity of the material in virtue of the low values of the modulus of elasticity of the multi-layer film;
5.an easy "film-removal" step, i.e. the removal of the excess material after cutting through a plotter, must be allowed;
6.the film must also ensure the "coating" of the material on which it is applied, where by coating we mean the ability of the film to keep its colouration unaltered, irrespective of the colour of the destination fabric on which it is applied.

This is obtained, according to the finding, by foreseeing a multi-layer film comprising the following four layers:
A)First support "carrier" made from paper or polyester plastic film, made suitably sticky or alternatively treated to give it particular roughness (see, for example, patent document VI94A000066, quoted above);
B) Second support "carrier", made from paper or plastic film suitable for acting as a support (polyester, polythene or polypropylene);
C) Coloured film with one or more polymer-based layers, able to "float" on the support without sinking during the application of the writing to the support itself;
D)Thermo-softening film, also with one or more polymer-based layers, intended to melt onto the destination material, fixing the decoration to the aforementioned support.

Layer C consists of a coloured film that can foresee one or more polymer-based layers, (foreseen in a percentage greater than 50%) with kofler/hot melting point (ANSI/ASTM D3451-76) > 160°, which is able to "float" on the material without sinking during the application of the decoration to the aforementioned material. Moreover, such a layer, just like the aforementioned layer D, must be able to deform mechanically, both longitudinally and transversally, according to the following properties foreseen by standard ISO 527-3/2/200, which foresees:
a)elongation at break > 600%, both in the longitudinal direction, and in the transversal direction;
b) modulus of elasticity at 100% < 9 MPA, both in the longitudinal direction, and in the transversal direction;
c) modulus of elasticity at 300% < 20 MPA, both in the longitudinal direction, and in the transversal direction.

According to a preferred embodiment, layer C, as already stated previously, consists of a base of polymers (> 50%) selected from the group comprising acrylic resins, polyurethane resins (PU), co-polyester resins (TPE-E), co-polyamide resins (TPE-PA) and/or their mixtures.

Vice-versa layer D consists of a thermo-softening film, which can in turn also be made from one or more layers in polymer phase (also in this case > 50%), this time thermoplastic, with kofler/hot melting points (ANSI/ASTM D3451-76) < 140°; this film, if subjected to suitable pressure and temperature conditions, for a certain time (these suitable conditions not forming part of the present patent), melts onto the material beneath fixing the writing to the aforementioned material.

It is possible to ensure that the combination of the two layers C, D can be obtained through co-extrusion in flat or blown film, through spreading, through calendering or through lamination of many films.

According to a preferred embodiment of the finding, the layer D consists of a base of polymers, which, also in this case, shall have a percentage of > 50%, selected from the group comprising acrylic resins, polyurethane resins (PU), co-polyester resins (TPE-E), co-polyamide resins (TPE-PA) and/or their mixtures.

In particular, the multi-layer film according to the finding must be such as to pass standards ASTM D412 through an "elongation set"; such standards foresee the application of strains on the writing for a period of five minutes and the following must be true:
d)the elastic retention (or permanent deformation) after elongation at 100% must be ≤ 20%, both in the longitudinal direction, and in the transversal direction;
e)elastic retention (or permanent deformation) after elongation at 200% must be < 45%, both in the longitudinal direction, and in the transversal direction.

For purely indicating purposes and without this constituting any limitation to the scope of protection of the present finding, we display, hereafter, the indicative thicknesses of the various layers composing the film according to the finding:
layer A: 70 µm;
layer B: 20 µm;
layer C: 60 µm;
layer D: 60 µm.

## Claims

1. THERMOADHESIVE MULTI-LAYER FILM, **characterised in that** it foresees the following four layers:
A) First support "carrier" made from paper or polyester plastic film, made suitably sticky or alternatively treated, with per se known methods, with a process suitable for giving it particular roughness;
B) Second support "carrier", made from paper or polythene plastic film;
C) Coloured film with one or more polymer-based layers, able to "float" on the support on which it is printed without sinking during the application of the writing to the support itself;
D) Thermo-softening film, also with one or more polymer-based layers, intended to melt onto the destination material, fixing the decoration to the aforementioned support,
the film being further **characterised in that** layer C consists of a coloured film that foresees one or more polymer-based layers, foreseen in a percentage of more than 50%, kofler/hot melting point (ANSI/ASTM D3451-76) > 150°, which is able to "float" on the material without sinking during the application of the decoration to the aforementioned material, such a film also being able to deform mechanically both longitudinally and transversally, according to the following properties:
a) elongation at break > 600%, both in the longitudinal direction, and in the transversal direction;
b) modulus of elasticity at 100% < 9 MPA, both in the longitudinal direction, and in the transversal direction;
c) modulus of elasticity at 300% < 20 MPA, both in the longitudinal direction, and in the transversal direction.

2. FILM, according to claim 1, **characterised in that** layer C consists of a base of polymers, selected from the group comprising acrylic resins, polyurethane resins (PU), co-polyester resins (TPE-E), co-polyamide resins (TPE-PA) and/or their mixtures.

3. FILM, according to claims 1 or 2, **characterised in that** layer D consists of a thermo-softening film, in turn also made from one or more layers of thermoplastic polymers (foreseen in a percentage of more than 50%), with kofler/hot melting point (ANSI/ASTM D3451-76) < 140°, such a film being able to mechanically deform both longitudinally and transversally, according to the following properties:
a) elongation at break > 600%, both in the longitudinal direction, and in the transversal direction;
b) modulus of elasticity at 100% < 9 MPA, both in the longitudinal direction, and in the transversal direction;
c) modulus of elasticity at 300% < 20 MPA, both in the longitudinal direction, and in the transversal direction.

4. FILM, according to claim 1, **characterised in that** the combination of the two layers C and D is obtained through co-extrusion in flat or blown film, through spreading, through calendering or through lamination of many films.

5. FILM, according to claim 1, **characterized in that** at least one of the two layers C and D consists of a base of polymers, with a percentage of > 50%, selected from the group comprising acrylic resins, polyurethane resins (PU), co-polyester resins (TPE-E), co-polyamide resins (TPE-PA)and/or their mixtures.

## Patentansprüche

1. Mehrlagige Thermoklebefolie, **dadurch gekennzeichnet, dass** die folgenden vier Lagen vorgesehen sind:
A) ein erster Auflage-"Träger" aus Papier oder Polyester-Kunststoff-Folie, der ausreichend klebend gemacht wird oder alternativ mittels an sich bekannter Methoden in einem Verfahren behandelt wird, das geeignet ist, ihm eine bestimmte Rauheit zu verleihen;
B) ein zweiter Auflage-"Träger" aus Papier oder Polyethylen-Kunststoff-Folie;
C) eine farbige Folie mit einer oder mehreren Lagen auf Polymerbasis, welche auf die Auflage, auf welche sie aufgedruckt wird, "schwimmen" kann, ohne während des Vorgangs des Aufbringens auf die Auflage selbst einzusinken;
D) eine Thermoerweichungsfolie, ebenfalls mit einer oder mehreren Lagen auf Polymerbasis, die dazu vorgesehen ist, auf das Bestimmungsmaterial aufzuschmelzen und so die Dekoration auf der vorgenannten Auflage zu fixieren, wobei die Folie weiter **dadurch gekennzeichnet ist, dass** die Lage C aus einer farbigen Folie besteht, die eine oder mehrere Lagen auf Polymerbasis vorsieht, vorgesehen in einem Verhältnis von mehr als 50%, Kofler/Schmelzpunkt (ANSI/ASTM D3451-76) > 160°, der auf dem Material "schwimmen" kann, ohne während der Aufbringung der Dekoration auf das vorgenannte Material einzusinken, wobei eine derartige Folie außerdem sowohl in Längs- wie auch in Querrichtung mechanisch deformiert werden kann, und zwar mit folgenden Eigenschaften:
a) Verlängerung bis Bruch > 600%, sowohl in der Längs- wie auch in der Querrichtung;
b) Elastizitätsbetrag bei 100% < 9 MPA, sowohl in der Längs- wie auch in der Querrichtung;
c) Elastizitätsbetrag bei 300% < 20 MPA, sowohl in der Längswie auch in der Querrichtung.

2. Folie nach Anspruch 1, **dadurch gekennzeichnet, dass** die Lage C aus einer Basis von Polymeren besteht, ausgewählt aus der Gruppe umfassend Acrylharze, Polyurethanharze (PU), Copolymerharze (TPE-E), Copolyamidharze (TPE-PA) und/oder Mischungen derselben.

3. Film nach Anspruch 1 oder 2, **dadurch gekennzeichnet, dass** die Lage D aus einer Thermoerweichungsfolie besteht, welche wiederum auch aus einer oder mehreren Schichten thermoplastischer Polymere (vorgesehen in einem Verhältnis von mehr als 50%) hergestellt ist, mit einem Kofler/Schmelzpunkt (ANSI/ASTM D3451-76) < 140°, so dass sich ein Film sowohl in der Längs- wie auch in der Querrichtung mechanisch deformieren kann, und zwar gemäß den folgenden Eigenschaften:
a) Verlängerung bis Bruch > 600%, sowohl in der Längs- wie auch in der Querrichtung;
b) Elastizitätsbetrag bei 100% < 9 MPA, sowohl in der Längs- wie auch in der Querrichtung;
c) Elastizitätsbetrag bei 300% < 20 MPA, sowohl in der Längs- wie auch in der Querrichtung.

4. Folie nach Anspruch 1, **dadurch gekennzeichnet, dass** die Kombination der beiden lagen C und D durch Koextrusion als Flachfolie oder Schlauchfolie, durch Aufspreizen, durch Kalandrieren oder durch Laminieren vieler Folien hergestellt wird.

5. Folie nach Anspruch 1, **dadurch gekennzeichnet, dass** wenigstens eine der beiden Lagen C und D aus einer Polymerbasis besteht, mit einem Verhältnis von > 50%, ausgewählt aus der Gruppe umfassend Acrylharze, Polyurethanharze (PU), Copolyesterharze (TPE-E), Copolyamidharze (TPE-PA) und/oder Mischungen derselben.

## Revendications

1. Film thermocollant à couches multiples, **caractérisé en ce qu'**il prévoit les quatre couches suivantes :
A) un premier élément « porteur », constitué de papier ou d'un film de plastique polyester, produit de façon appropriée de manière à être collant ou traité autrement, avec des procédés connus, avec un traitement approprié de manière à lui conférer une rugosité spécifique ;
B) un second élément « porteur », constitué de papier ou d'un film de plastique polyéthylène ;
C) un film coloré avec une ou plusieurs couches à base de polymères, capable de « flotter » sur l'élément sur lequel il est imprimé sans couler au cours de l'application de l'écriture sur l'élément même ;
D) un film thermo-ramollissant, avec également une ou plusieurs couches à base de polymères, prévu pour fondre sur le matériau de destination, fixant la décoration à l'élément mentionné précédemment,
le film étant en outre **caractérisé en ce que** la couche C comprend un film coloré qui prévoit une ou plusieurs couches à base de polymères, avec un pourcentage prévu supérieur à 50 %, un point de fusion au banc Kofler (ANSI/ASTM D3451-76) > 160, qui est capable de « flotter » sur le matériau sans couler au cours de l'application de la décoration au matériau mentionné précédemment, un tel film étant également capable de se déformer mécaniquement longitudinalement et transversalement, selon les propriétés suivantes :
a) élongation à la rupture > 600 %, dans la direction longitudinale et dans la direction transversale ;
b) module d'élasticité à 100 % < 9 MPA, dans la direction longitudinale et dans la direction transversale ;
c) module d'élasticité à 300 % < 20 MPA, dans la direction longitudinale et dans la direction transversale.

2. Film selon la revendication 1, **caractérisé en ce que** la couche C se compose d'une base de polymères, choisis dans le groupe comprenant des résines acryliques, des résines polyuréthane (PU), des résines copolyester (TPE-E), des résines copolyamide (TPE-PA) et/ou des mélanges de celles-ci.

3. Film selon les revendications 1 ou 2, **caractérisé en ce que** la couche D comprend un film thermo-ramollissant, constitué également d'une ou de plusieurs couches de polymères thermoplastiques (selon un pourcentage prévu supérieur à 50 %), avec un point de fusion au banc Kofler (ANSI/ASTM D3451-76) < 140°, un tel film étant capable de se déformer mécaniquement longitudinalement et transversalement, selon les propriétés suivantes :
a) élongation à la rupture > 600 %, dans la direction longitudinale et dans la direction transversale ;
b) module d'élasticité à 100 % < 9 MPA, dans la direction longitudinale et dans la direction transversale ;
c) module d'élasticité à 300 % < 20 MPA, dans la direction longitudinale et dans la direction transversale.

4. Film selon la revendication 1, **caractérisé en ce que** la combinaison des deux couches C et D est obtenue par coextrusion en un film plan ou soufflé, par enduction, par calandrage ou par laminage de nombreux films.

5. Film selon la revendication 1, **caractérisé en ce qu'**au moins une des deux couches C et D se compose d'une base de polymères, avec un pourcentage > 50 %, choisis dans le groupe comprenant des résines acryliques, des résines polyuréthane (PE), des résines copolyester (TPE-E), des résines copolyamide (TPE-PA) et/ou des mélanges de celles-ci.
